# EUROPÄISCHE PATENTSCHRIFT

(11) **EP 4 374 111 B1**
(45) Veröffentlichungstag und Bekanntmachung des Hinweises auf die Patenterteilung: **04.03.2026**
(21) Anmeldenummer: 22757500.8
(22) Anmeldetag: 21.07.2022
(51) Int. Cl.: F23J 13/00, F23M 9/00, F23L 11/00, F23L 13/02

(54) **RÜCKSTROMSPERRVORRICHTUNG FÜR EINEN VON EINER LUFTSTRÖMUNG DURCHSTRÖMTEN STRÖMUNGSKANAL**
NON-RETURN VALVE FOR A FLOW CHANNEL THROUGH WHICH A FLOW OF AIR FLOWS
DISPOSITIF ANTI-RETOUR POUR UN CANAL D'ÉCOULEMENT TRAVERSÉ PAR UN ÉCOULEMENT D'AIR

(30) Priorität: 21.07.2021 DE 102021118897
(43) Veröffentlichungstag der Anmeldung: 29.05.2024
(73) Patentinhaber: Skoberne GmbH, 64319 Pfungstadt (DE)
(72) Erfinder: SCHUCK, Thomas, 64319 Pfungstadt (DE)
(74) Vertreter: Habermann Intellectual Property Partnerschaft von Patentanwälten mbB
(86) Internationale Anmeldenummer: PCT/EP2022/070503
(87) Internationale Veröffentlichungsnummer: WO 2023/001970

(56) Entgegenhaltungen:
- EP-A1- 1 544 544
- AT-A1- 508 208
- DE-A1- 19 606 403
- DE-A1- 3 806 325

## Beschreibung

Die Erfindung betrifft eine Rückstromsperrvorrichtung für einen von einer Luftströmung durchströmten Strömungskanal mit einem von der Luftströmung in einer Ausströmungsrichtung durchströmbaren Gehäuse mit einer Ausströmungsöffnung, die mit einer schwenkbar an dem Gehäuse gelagerten Sperrklappe verschließbar ist, wobei das Gehäuse hülsenförmig ausgebildet ist und der Ausströmungsöffnung gegenüberliegend eine Einströmungsöffnung aufweist, wobei das Gehäuse mit einem in Umfangsrichtung um eine Außenwand des Gehäuses verlaufenden Dichtungsflansch in einem hohlzylindrischen Strömungskanal angeordnet werden kann, sodass eine durch den Strömungskanal hindurch strömende Luftströmung in Ausströmungsrichtung durch die Einströmungsöffnung in das Gehäuse einströmt und durch die Ausströmungsöffnung aus dem Gehäuse ausströmt, wobei die Sperrklappe in einer Sperrposition die Ausströmungsöffnung verschließend an einem Öffnungsrand der Ausströmungsöffnung anliegt und eine unerwünschte Rückströmung gegen die Ausströmungsrichtung in die Ausströmungsöffnung hinein verhindert, wobei die Sperrklappe in einer Öffnungsposition von dem Öffnungsrand weg verschwenkt ist und die Ausströmungsöffnung für eine in der Ausströmungsrichtung durch das Gehäuse hindurch strömende Luftströmung freigibt, und wobei der Öffnungsrand der Ausströmungsöffnung einen Scharnierbereich aufweist, in welchem die Sperrklappe schwenkbar an dem Gehäuse gelagert ist, der in einen in Umfangsrichtung gegenüberliegend angeordneten Sperrklappenanschlagbereich übergeht, der in Ausströmungsrichtung versetzt ausgebildet ist.

Es ist aus der Praxis bekannt, dass eine derartige Rückstromsperrvorrichtung in einem von einer Luftströmung durchströmten Strömungskanal angeordnet sein kann, um die in der bestimmungsgemäß gewünschten Ausströmungsrichtung durch den Strömungskanal strömende Luftströmung mit einer möglichst geringen Beeinträchtigung durch die Rückstromsperrvorrichtung hindurch strömen zu lassen, jedoch den Strömungskanal für eine entgegen der Ausströmungsrichtung durch den Strömungskanal strömenden Gegenluftströmung abzusperren und dadurch zu verhindern, dass eine gegen die Ausströmungsrichtung durch den Strömungskanal strömende Gegenluftströmung durch die Rückstromsperrvorrichtung hindurch in einen hinter der Rückstromsperrvorrichtung befindlichen Bereich des Strömungskanals gelangen kann.

Derartige Rückstromsperrvorrichtungen können beispielweise in Abgasanlagen verwendet und in einem von einer Abgasströmung durchströmten Abgaskanal angeordnet, bzw. eingesetzt werden. Die von einer Heizungsanlage erzeugten und ausgestoßenen Abgase können in der vorgegebenen Ausströmungsrichtung durch einen Abgaskanal hindurch strömen und die in dem Abgaskanal angeordnete Rückstromsperrvorrichtung passieren, wobei die Abgase in Ausströmungsrichtung durch den Abgaskanal und durch das darin angeordnete Gehäuse der Rückstromsperrvorrichtung hindurch strömen und die Sperrklappe in eine Öffnungsposition verschwenken. Eine unerwünschte Rückströmung der Abgase durch diesen Abgaskanal in Richtung der Heizungsanlage wird durch die Rückstromsperrvorrichtung jedoch verhindert, da sich die Sperrklappe selbsttätig von einer Öffnungsposition in ihre Sperrposition verlagert und die Ausströmungsöffnung verschließt, sobald keine Luftströmung mehr in Ausströmungsrichtung durch das Gehäuse hindurch strömt. Falls eine gegen die Ausströmungsrichtung durch den Abgaskanal rückströmende Gegenluftströmung zu der Rückstromsperrvorrichtung gelangt, wird die Sperrklappe durch die gegen die Ausströmungsrichtung strömende Gegenluftströmung zusätzlich in ihrer Sperrposition an den Öffnungsrand der Ausströmungsöffnung angedrückt und verschließt dadurch die Ausströmungsöffnung zuverlässig.

Aus der Praxis sind verschiedene Ausgestaltungen derartiger Rückstromsperrvorrichtungen bekannt. Dabei wird durch unterschiedliche Formgebungen des Gehäuses und der Sperrklappe sowie durch verschiedene Lagermechanismen der verlagerbaren Sperrklappe jeweils versucht, mit der Rückstromsperrvorrichtung eine in der gewünschten Ausströmungsrichtung durch die Rückstromsperrvorrichtung hindurch strömende Luftströmung möglichst wenig zu beeinflussen und zu behindern, und gleichzeitig eine entgegen der Ausströmungsrichtung an die Ausströmungsöffnung der Rückstromsperrvorrichtung anströmende Luftströmung zuverlässig zu blockieren und den Strömungskanal abzusperren.

Die beispielsweise in DE 38 06 325 A1 oder in EP 1 544 544 A1 oder in AT 508 208 A1 beschriebenen Rückstromsperrvorrichtungen weisen jeweils ein hülsenförmiges Gehäuse und eine daran verlagerbare Sperrklappe auf, mit welcher ein durch das Gehäuse hindurchführender Strömungskanal abgesperrt werden kann. Diese Rückstromsperrvorrichtungen ermöglichen jedoch keine einfache Kondensatabführung in einer Richtung entgegen der Ausströmungsrichtung, da in dieser Richtung die Sperrklappe die Ausströmungsöffnung versperrt und einen Kondensatabfluss durch das Gehäuse hindurch blockiert.

In DE 196 06 403 A1 ist eine Rückstromsperrvorrichtung nach dem Oberbegriff des Anspruchs 1 offenbart, bei der eine Kondensatabführung durch eine an dem hülsenförmigen Gehäuse vorbeiführenden Siphon oder durch eine durch die Gehäusewand hindurchgeführte Bohrung und durch einen hinter dem Gehäuse angeordneten Siphon ermöglicht wird. Es wird deshalb als eine Aufgabe der vorliegenden Erfindung angesehen, eine Rückstromsperrvorrichtung der eingangs genannten Gattung derart auszugestalten, dass eine in Ausströmungsrichtung durch die Rückstromsperrvorrichtung hindurch strömende Luftströmung möglichst ungehindert durch die Rückstromsperrvorrichtung hindurch strömen kann, während eine in entgegengesetzter Richtung strömende Gegenluftströmung zuverlässig verhindert, beziehungsweise von einem Durchströmen der Rücksperrvorrichtung entgegen der Ausströmungsrichtung abgehalten werden soll, wobei gleichzeitig ein sich gegebenenfalls entgegen der Ausströmungsrichtung an der Rückstromsperrvorrichtung ansammelndes Kondensat raumsparend und zuverlässig abgeführt werden können soll.

Diese Aufgabe wird erfindungsgemäß dadurch gelöst, dass das Gehäuse in Umfangsrichtung eine Einbuchtung aufweist, die neben der Ausströmungsöffnung angeordnet ist und nicht von der Sperrklappe verschlossen wird, sodass die Einbuchtung bei einem in den umgebenden Strömungskanal eingesetzten Gehäuse eine Kondensatkammer bildet, die aus einer der Ausströmungsrichtung entgegengesetzten Richtung zugänglich ist, und dass in der Einbuchtung in der Nähe des Öffnungsrandes der Ausströmungsöffnung eine Durchflussöffnung angeordnet ist, durch welche ein Kondensat, welches sich in der von der Einbuchtung begrenzten Kondensatkammer ansammelt, unter Umgehung der Sperrklappe in einen Innenraum des Gehäuses fließen kann.

Erfindungsgemäß ist vorgesehen, dass in der Einbuchtung in der Nähe des Öffnungsrandes der Ausströmungsöffnung eine Durchflussöffnung angeordnet ist, durch welche ein Kondensat, welches sich in der von der Einbuchtung begrenzten Kondensatkammer ansammelt, unter Umgehung der Sperrklappe in einen Innenraum des Gehäuses fließen kann. Erst nachdem sich eine Menge Kondensat in der Kondensatkammer angesammelt hat und ein Kondensatpegel in der Kondensatkammer so weit ansteigt, dass der Kondensatpegel bis an die Durchflussöffnung ansteigt, kann das Kondensat aus der Kondensatkammer durch die Durchflussöffnung in den Innenraum des Gehäuses abfließen.

Durch einen Abstand der Durchflussöffnungskanalmündung von der Durchflussöffnung kann eine Höhe einer Kondensatsäule vorgegeben werden, die bei einer vollständig gefüllten Kondensatkammer in dem Durchflussöffnungskanal ausgebildet ist und einen Widerstand gegen die entgegen der Ausströmungsrichtung an die Rückstromsperrvorrichtung anströmende Gegenluftströmung bildet. Je größer der Abstand von der Durchflussöffnungskanalmündung von der Durchflussöffnung vorgegeben wird, umso größer muss der Strömungsdruck der entgegen der Ausströmungsrichtung anströmenden Gegenluftströmung sein, um das in der Kondensatkammer angesammelte Kondensat durch den Durchflussöffnungskanal und die Durchflussöffnung drücken zu können, bis eine ausreichende Kondensatmenge aus der Kondensatkammer ausgeflossen ist und die Durchflussöffnungskanalmündung für die Gegenluftströmung freiliegt.

Da sich die Einbuchtung in axialer Richtung von dem Öffnungsrand der Ausströmungsöffnung in Richtung der Einströmungsöffnung erstreckt und gegebenenfalls bis zu dem Dichtungsflansch ragt, kann mit der in der Nähe des Öffnungsrandes der Ausströmungsöffnung angeordneten Durchflussöffnung ein Siphon gebildet werden. Um zu verhindern, dass die Durchflussöffnung für eine entgegen der Ausströmungsrichtung strömende Gegenluftströmung zugänglich ist, ist einer Ausgestaltung des Erfindungsgedankens zufolge vorgesehen, dass sich ein luftdichter Durchflussöffnungskanal in der Kondensatkammer von der Durchflussöffnung in Richtung des Dichtungsflansches erstreckt und eine Durchflussöffnungskanalmündung in einem Abstand von der Durchflussöffnung in der Kondensatkammer angeordnet ist. Sobald der Kondensatpegel in der Kondensatkammer bis oberhalb der Durchflussöffnungskanalmündung ansteigt ist der Durchflussöffnungskanal durch das in der Kondensatkammer gesammelte Kondensat verschlossen. Eine entgegen der Ausströmrichtung an die Rückstromsperrvorrichtung anströmende Gegenluftströmung kann dann nicht mehr unter Umgehung der Sperrklappe in den Innenraum des Gehäuses und entgegen der Ausströmrichtung in dem Strömungskanal weiter strömen.

Optional ist dabei zweckmäßigerweise vorgesehen, dass die Einbuchtung in Umfangsrichtung in dem Scharnierbereich angeordnet ist und sich in einer axialen Richtung von einer Außenseite des Öffnungsrands der Ausströmungsöffnung in Richtung der Einströmungsöffnung, beziehungsweise bis zu dem Dichtungsflansch hin erstreckt. Da ein Umfangsrand der Sperrklappe in dem Scharnierbereich im Hinblick auf eine möglichst weite Öffnungsbewegung der Sperrklappe einen Abstand zu der Innenwand des umgebenden Strömungskanals aufweisen soll, eignet sich dieser Bereich in besonderer Weise für die Ausbildung einer Einbuchtung und einer dadurch gebildeten Kondensatkammer.

Die meisten Rückstromsperrvorrichtungen werden bestimmungsgemäß in vertikal ausgerichteten Leitungsabschnitten angeordnet, in denen eine Luftströmung entweder vertikal nach oben oder vertikal nach unten strömen kann. Da der Öffnungsrand bei einer auf diese Weise angeordneten Rückstromsperrvorrichtung nicht waagrecht ausgerichtet ist, sondern der Sperrklappenanschlagbereich in Ausströmungsrichtung versetzt angeordnet ist, ist die Sperrklappe in einem vertikal ausgerichteten Leitungsabschnitt nicht waagrecht angeordnet, sodass sich keine Flüssigkeitstropfen auf der Sperrklappe ansammeln können, welche eine Verlagerung der Sperrklappe und ein Freigeben der Ausströmungsöffnung beeinträchtigen könnten. Zudem kann durch die nicht waagrecht, sondern in einem Winkel von mindestens einigen Grad hierzu ausgerichtete Sperrklappe weitgehend unabhängig von einem Eigengewicht der Sperrklappe durch den in Strömungsrichtung vorgegebenen Versatz des Sperrklappenanschlagbereichs relativ zu dem Scharnierbereich ein Anteil der in Strömungsrichtung gerichteten Kraftkomponente der Gewichtskraft der Sperrklappe vorgegeben und die mit dieser Kraftkomponente bewirkte und die Sperrklappe an den Öffnungsrand des Gehäuses andrückende Schließwirkung vorgegeben werden. Mit der Schließwirkung wird die Sperrklappe bei einer fehlenden Luftströmung an den Öffnungsrand der Ausströmungsöffnung gedrückt und verschließt dadurch die Ausströmungsöffnung, sodass keine unerwünschte Gegenluftströmung durch eine nicht vollständig verschlossene Sperrklappe entgegen der Ausströmungsrichtung die Rückstromsperrvorrichtung passieren kann. Für Sperrklappen mit einem hohen Eigengewicht kann beispielsweise der Versatz des Sperrklappenanschlagbereichs größer vorgegeben als bei Sperrklappen mit einem geringen Eigengewicht, um in beiden Fällen jeweils einen vergleichbar großen Anpressdruck der Sperrklappe an den Öffnungsrand zu bewirken. Dieser Anpressdruck kann damit in einfacher Weise und ohne zusätzliche Rückstellvorrichtungen bzw. Federeinrichtungen in Abhängigkeit von der jeweils verwendeten Sperrklappe vorgegeben werden.

Einer besonders vorteilhaften Ausgestaltung des Erfindungsgedankens zufolge ist vorgesehen, dass die Sperrklappe aus einem elastischen Kunststoffmaterial hergestellt ist und so ausgebildet und an dem Gehäuse gelagert ist, dass die Ausströmungsöffnung ohne eine hindurchströmende Luftströmung mit der elastisch vorgespannten Sperrklappe verschlossen ist. Eine Sperrklappe aus einem elastischen Kunststoffmaterial kann einstückig ausgebildet und besonders kostengünstig hergestellt sein. Eine Sperrklappe kann beispielsweise aus einem Zuschnitt einer Kunststofffolie oder Kunststoffbahn hergestellt werden. Insbesondere Fluorelastomere wie beispielsweise Viton^{®} werden auf Grund ihrer großen Temperaturbeständigkeit und Chemikalienbeständigkeit als besonders geeignetes elastisches Kunststoffmaterial angesehen.

Gegenüber einer kräftefrei angeordneten Sperrklappe ist die Sperrklappe aus einem elastischen Kunststoffmaterial zweckmäßigerweise derart angeordnet, dass die an dem Öffnungsrand anliegende Sperrklappe elastisch verformt ist und die dadurch erzeugten Rückstellkräfte die elastisch verformte Sperrklappe an den Öffnungsrand andrücken. Auf diese Weise kann bei einer Sperrklappe mit einem besonders geringen Eigengewicht ein durch die Elastizität und Formgebung der Sperrklappe vorgebbarer Anpressdruck an den Öffnungsrand der Ausströmungsöffnung erzeugt und vorgegeben werden.

Vorzugsweise ist dabei vorgesehen, dass die Sperrklappe einen Festlegungsabschnitt zum Festlegen der Sperrklappe auf oder an dem Scharnierbereich des Öffnungsrands sowie einen Schwenkklappenabschnitt aufweist, der über ein Filmscharnier mit dem Festlegungsabschnitt verbunden ist. Die Ausbildung eines Filmscharniers ermöglicht eine einstückige Formgebung und Herstellung der Sperrklappe. Der Festlegungsabschnitt kann für die Festlegung und Befestigung der Sperrklappe an dem Gehäuse verwendet werden. Dabei kann beispielsweise eine formschlüssige oder rastende Festlegung des Festlegungsabschnitts an dem Scharnierbereich des Gehäuses vorgegeben werden. Es ist ebenfalls denkbar, dass der Festlegungsabschnitt mit dem Scharnierbereich des Öffnungsrands verklebt oder stoffschlüssig verfügt wird, beispielsweise durch Verschweißen mit einem üblichen Reibschweißverfahren oder Ultraschallschweißverfahren. Eine aufwändige Lagerung der Sperrklappe an einer schwenkbar gelagerten Welle oder die Verwendung von zusätzlichen Federeinrichtungen für die Erzeugung eines ausreichenden Anpressdrucks ist nicht erforderlich.

Der Scharnierbereich des Öffnungsrands kann eine senkrecht zu der Ausströmungsrichtung ausgerichtete Kontaktfläche für den daran festgelegten Festlegungsabschnitt der Sperrklappe aufweisen, während der Sperrklappenanschlagbereich hierzu in Ausströmungsrichtung versetzt angeordnet ist und dadurch bei einer ebenflächig hergestellten Sperrklappe aus elastischen Kunststoffmaterial eine Verformung erzwingt, deren Rückstellkräfte den in einem Winkel größer 0° zu der Kontaktfläche und dem Festlegungsabschnitt ausgerichteten Schwenkklappenabschnitt an den Öffnungsrand drücken.

Einer Ausgestaltung des Erfindungsgedankens zufolge ist vorgesehen, dass in Ausströmungsrichtung vor der Sperrklappe ein Auflagesteg angeordnet ist, auf welchem die nicht verschwenkte Sperrklappe aufliegt, und der sich quer über die Ausströmungsöffnung erstreckt und dadurch bei einer entgegen der Ausströmungsöffnung gerichteten Rückströmung ein unerwünschtes Verschwenken oder Verformen der elastischen Sperrklappe entgegen der Ausströmungsrichtung verhindert. Bei einer starken unerwünschten Rückströmung gegen die Ausströmungsrichtung könnte eine Sperrklappe aus einem elastischen Kunststoffmaterial verformt werden und entgegen der Ausströmungsrichtung in das Gehäuse hineingedrückt werden. Durch den Auflagesteg wird eine derartige unerwünschte Verformung entgegen der Ausströmungsrichtung verhindert. Je elastischer das Kunststoffmaterial der Sperrklappe ist, umso breiter oder länger kann der Auflagesteg ausgebildet sein. Es kann auch vorgesehen sein, dass zwei oder mehr dünne Auflagestege beabstandete Bereiche des Öffnungsrands miteinander verbinden und sich quer über die Ausströmungsöffnung erstrecken, um mehrere Auflageflächen für die elastisch verformbare Sperrklappe innerhalb der Ausströmungsöffnung vorgeben zu können.

Gemäß einer als besonders vorteilhaft erachteten Ausgestaltung des Erfindungsgedankens zufolge ist vorgesehen, dass die Sperrklappe eine domförmige Wölbung mit einem in Ausströmungsrichtung vorgewölbten Innenbereich aufweist. Durch die domförmige Wölbung wird auch bei einer nur geringfügig schräg angeordneten Sperrklappe verhindert, dass sich Flüssigkeit auf der domförmig vorgewölbten Außenseite der Sperrklappe ansammeln kann, welche eine Schwenkbewegung der Sperrklappe in Ausströmungsrichtung behindern könnte.

Zweckmäßigerweise ist optional vorgesehen, dass der Öffnungsrand einen nicht nur in Umfangsrichtung, sondern auch in Ausströmungsrichtung gekrümmten Verlauf aufweist.

Durch die Ausgestaltung der Sperrklappe mit einer domförmigen Wölbung und mit einem in Ausströmungsrichtung vorgewölbten Innenbereich lässt sich die schwenkbar an dem Gehäuse gelagerte Sperrklappe in eine Öffnungsposition verschwenken, in welcher die Sperrklappe eng an einer Innenwand des umgebenden Strömungskanals anliegen kann und nur wenig in einen von einer Innenseite des hülsenförmigen Gehäuses begrenzten Durchströmungsquerschnitt hineinragt.

Der Öffnungsrand und dementsprechend ein in seinem Verlauf daran angepasster Umfangsrand der Sperrklappe geht zweckmäßigerweise kontinuierlich von dem Scharnierbereich in den in Umfangsrichtung gegenüberliegenden und in Ausströmungsrichtung versetzten Sperrklappenanschlagbereich über. Da der Öffnungsrand nicht senkrecht zu der Ausströmungsrichtung verläuft, sondern ausgehend von einem Scharnierbereich in den in Umfangsrichtung gegenüberliegend angeordneten und in Ausströmungsrichtung versetzt ausgebildeten Sperrklappenanschlagbereich übergeht, verläuft der Umfangsrand der Sperrklappe nicht senkrecht zu der Ausströmungsrichtung bzw. senkrecht zu einer Mittenachse des hülsenförmigen Gehäuses. Die Sperrklappe ist dementsprechend in Ihrer Sperrposition nicht senkrecht zu der Anströmungsrichtung gelagert, sondern in einem Winkel schräg zu der Ausströmungsrichtung an dem Öffnungsrand anliegend gelagert, der durch den in Ausströmungsrichtung bestehenden Versatz zwischen dem Sperrklappenanschlagbereich und dem Scharnierbereich vorgegeben ist. Die in einem Winkel zu der Ausströmungsrichtung in der Sperrposition gelagerte Sperrklappe wird bereits durch eine geringe Druckdifferenz, die von einer in Ausströmungsrichtung durch das Gehäuse hindurch strömende Luftströmung erzeugt wird, von dem Öffnungsrand des hülsenförmigen Gehäuses abgehoben und gibt die Ausströmungsöffnung für die hindurch strömende Luftströmung frei. Durch das Eigengewicht der Sperrklappe wird die Sperrklappe aus der Öffnungsposition in die Sperrposition verlagert, sobald keine ausreichende Druckdifferenz vorliegt, beziehungsweise keine Luftströmung in Ausströmungsrichtung durch das Gehäuse der Rückstromsperrvorrichtung hindurch strömt.

Eine derartige Rückstromsperrvorrichtung eignet sich insbesondere zum Einbau in einen vertikal verlaufenden Abschnitt eines Abgaskanals. Die Querschnittsfläche des hülsenförmigen Gehäuses ist zweckmäßigerweise an eine Querschnittsfläche des umgebenden Abgaskanals angepasst, sodass das Gehäuse mit dem in Umfangsrichtung um die Außenwand des Gehäuses verlaufenden Dichtungsflansch dicht in dem Abgaskanal angeordnet werden kann und durch den Dichtungsflansch verhindert wird, dass in einem Spalt zwischen der Außenwand des Gehäuses und dem umgebenden Abgaskanal eine Luftströmung an der Rückstromsperrvorrichtung vorbei strömen kann. Das hülsenförmige Gehäuse der Rückstromsperrvorrichtung weist in vorteilhafter Weise eine kreisrunde Querschnittsfläche auf, deren Durchmesser in Verbindung mit dem umlaufenden Dichtungsflansch an einen Innendurchmesser eines ebenfalls eine kreisförmige Querschnittsfläche aufweisenden Abgaskanals angepasst ist. Es ist jedoch ebenfalls denkbar, dass das hülsenförmige Gehäuse der Rückstromsperrvorrichtung eine von einer kreisförmigen Querschnittsfläche abweichende Formgebung und beispielsweise eine rechteckförmige oder quadratische Querschnittsfläche aufweist.

Entlang des Öffnungsrandes ist zweckmäßigerweise eine wulstförmige Sperrklappendichtung angeordnet, die aus einem elastisch verformbaren Material besteht und bei einer an den Öffnungsrand der Ausströmungsöffnung angedrückten Sperrklappe die Ausströmungsöffnung luftdicht verschließt.

Auch an dem in Umfangsrichtung um die Außenwand des Gehäuses verlaufenden Dichtungsflansch kann eine elastische verformbare Umfangsdichtung angeordnet oder festgelegt sein. Die Umfangsdichtung kann beispielsweise eine O-Ring-Dichtung sein, die in einer an einer Außenseite des Dichtungsflansches angeordneten Umfangsnut eingelassen ist und in radialer Richtung etwas vorspringt.

Der in Umfangsrichtung um die Außenwand des Gehäuses verlaufende Dichtungsflansch kann optional an einem der Sperrklappe gegenüberliegenden äußeren Ende einen radial nach außen über eine Umfangsdichtung vorspringenden Umfangsrand aufweisen. Dieser Umfangsrand kann bei einer Montage als Anschlag für einen Endbereich eines Abgaskanalrohrs wirken und damit als Tiefenbegrenzung für die Rückstromsperrvorrichtung bei einer Einführung der Rückstromsperrvorrichtung in ein Abgaskanalrohr dienen. Zudem wird durch einen in Umfangsrichtung verlaufenden Anschlag ein Verkippen der Rückstromsperrvorrichtung innerhalb eines umgebenden Abgaskanals zuverlässig verhindert, sodass eine unbeabsichtigte Beeinträchtigung der Funktionsweise der schwenkbar gelagerten Sperrklappe und damit der Rückstromsperrvorrichtung bei der Montage sowie bei Wartungsarbeiten während der oftmals sehr langen Nutzungsdauer der Rückstromsperrvorrichtung vermieden werden kann.

Einer Ausgestaltung des Erfindungsgedankens zufolge ist vorgesehen, dass die Sperrklappe über ein Scharnier schwenkbar an dem Gehäuse gelagert ist, wobei das Scharnier in radialer Richtung von einem äußeren Umfangsrand des Dichtungsflanschs nach innen versetzt angeordnet ist. Aufgrund seiner domförmigen Wölbung ragt die in die Öffnungsposition verschwenkte Sperrklappe mit dem vorgewölbten Innenbereich über den Umfangsrand der Sperrklappe vor. Wäre das Scharnier in radialer Richtung unmittelbar angrenzend an den äußeren Umfangsrand des Dichtungsflanschs angeordnet, so würde durch die domförmige Wölbung eine Schwenkbewegung der Sperrklappe in Richtung der Öffnungsposition durch ein rasches Anschlagen des vorgewölbten Innenbereichs der Sperrklappe an der Innenwand des umgebenden Strömungskanals begrenzt werden und die Sperrklappe in der Öffnungsposition vergleichsweise weit nach innen in den Durchströmungsdurchmesser des hülsenförmigen Gehäuses ragen. Durch den radialen Versatz des Scharniers von dem äußeren Umfangsrand des Dichtungsflanschs nach innen wird eine vergleichsweise weite Schwenk- und Öffnungsbewegung der über das Scharnier schwenkbar an dem Gehäuse gelagerten Sperrklappe ermöglicht, bis der vorgewölbte Innenbereich der Sperrklappe an der Innenwand des umgebenden Strömungskanals anliegt.

In vorteilhafter Weise kann zudem vorgesehen sein, dass das Scharnier an einer Außenseite der Sperrklappe angeordnet ist, sodass der Öffnungsrand der Ausströmungsöffnung in dem Scharnierbereich einen noch größeren radialen Versatz nach innen relativ zu dem äußeren Umfangsrand des Dichtungsflanschs als das Scharnier aufweist. Dadurch wird zusätzlich eine noch größere Schwenkbewegung der Sperrklappe in die Öffnungsposition ermöglicht.

Im Hinblick auf eine möglichst zuverlässige Lagerung der Sperrklappe in dem Scharnier ist optional vorgesehen, dass das Scharnier mindestens ein an dem Scharnierbolzenaufnahmeelement mit einer radial nach außen gerichteten Scharnierbolzenaufnahmeöffnung aufweist, durch welche hindurch ein Scharnierbolzen eingeführt werden und in dem Scharnierbolzenaufnahmeelement schwenkbar gelagert werden kann, wobei die Scharnierbolzenaufnahmeöffnung in radialer Richtung näher als ein Durchmesser des Scharnierbolzens an dem äußeren Umfangsrand des Dichtungsflansches angeordnet ist. Vor der Anordnung der Rückstromsperrvorrichtung in einem die Rückstromsperrvorrichtung umgebenden Strömungskanal muss die Sperrklappe in dem Scharnier an dem Gehäuse gelagert werden. Zu diesem Zweck muss der Scharnierbolzen durch die radial nach außen gerichtete Scharnierbolzenaufnahmeöffnung in das mindestens eine Scharnierbolzenaufnahmeelement eingeführt werden. Da in dem montierten Zustand der Rückstromsperrvorrichtung in dem Strömungskanal die Scharnierbolzenaufnahmeöffnung einen geringeren Abstand zu der umgebenden Innenwand des Strömungskanals als den Durchmesser des Scharnierbolzens aufweist, kann der Scharnierbolzen nach der Montage der Rückstromsperrvorrichtung in dem Strömungskanal nicht mehr aus dem Scharnierbolzenaufnahmeelement herausbewegt werden. Auf diese Weise kann mit einfachen Mitteln die Betriebssicherheit der in dem umgebenden Strömungskanal angeordneten Rückstromsperrvorrichtung erheblich verbessert werden.

Dabei ist es für eine zuverlässige Lagerung der Sperrklappe in dem Scharnier unerheblich, ob das Scharnierbolzenaufnahmeelement mit der radial nach außen gerichteten Scharnierbolzenaufnahmeöffnung wie voranstehend beschrieben an dem Gehäuse ausgebildet ist und der Scharnierbolzen an der Sperrklappe ausgebildet ist, oder ob das Scharnierbolzenaufnahmeelement an der Sperrklappe ausgebildet und der Scharnierbolzen an dem Gehäuse ausgebildet ist. Sofern das Scharnierbolzenaufnahmeelement an der Sperrklappe ausgebildet ist, weist die Scharnierbolzenaufnahmeöffnung zweckmäßigerweise radial nach innen. Der Abstand der Scharnierbolzenaufnahmeöffnung in radialer Richtung relativ zu dem äußeren Umfangsrand des Dichtungsflanschs ist auch bei dieser Ausgestaltung in vorteilhafter Weise geringer als ein Durchmesser des Scharnierbolzens.

Um ein unerwünschtes Verkippen der Sperrklappe quer zu einer Schwenkrichtung der Sperrklappe zu verhindern weist das Scharnier zweckmäßigerweise mindestens zwei längs einer Schwenkachse beabstandete Scharnierbolzenaufnahmeelemente auf. In die mindestens zwei Scharnierbolzenaufnahmeelemente kann entweder ein einzelner und ausreichend langer Scharnierbolzen eingeführt werden, oder aber es sind für jedes Scharnierbolzenaufnahmeelement ein daran angepasster Scharnierbolzenabschnitt ausgebildet, der in das zugeordnete Scharnierbolzenaufnahmeelement eingeführt werden kann.

Insbesondere bei einem vertikal ausgerichteten Strömungskanal und einer Luftströmung, die wärmer als die Innenwand des Strömungskanals ist, wie es regelmäßig bei Abgasanlagen und einer Abgasströmung in einem davon durchströmten Abgaskanal der Fall ist, kann nicht ausgeschlossen werden, dass ein Anteil der in der Luftströmung mitgeführten Feuchte an der Innenwand des umgebenden Strömungskanals kondensiert und der Schwerkraft folgend an der Innenwand des Strömungskanals herabrinnt. Um das herabrinnende Kondensat an der Rückstromsperrvorrichtung sammeln zu können, die aufgrund des dicht an der Innenwand des Strömungskanals anliegenden Dichtungsflanschs ein weiteres Herabrinnen des Kondensats über die Rückstromsperrvorrichtung hinweg verhindert, ist durch eine Einbuchtung des hülsenförmigen Gehäuses in Umfangsrichtung eine Kondensatkammer vorgesehen, in der das herabrinnende Kondensat gesammelt werden kann.

Gemäß einer besonders vorteilhaften Ausgestaltung des Erfindungsgedankens ist vorgesehen, dass eine Wölbung der Sperrklappe derart an einen äußeren Umfangsrand des Dichtungsflanschs angepasst ist, dass die Sperrklappe in der Öffnungsposition möglichst weit von dem Öffnungsrand weg in Richtung einer Innenwand des umgebenden Strömungskanals verschwenkt werden kann, ohne in radialer Richtung an den äußeren Umfangsrand des Gehäuses heran zu ragen, der an der Innenwand des umgebenden Strömungskanals anliegt. In Verbindung mit dem auch in der Ausströmungsrichtung gekrümmten Verlauf des Öffnungsrands der Ausströmungsöffnung und dem daran angepassten Umfangsrand der Sperrklappe kann durch eine geeignete Anpassung und Vorgabe der Wölbung der Sperrklappe erreicht werden, dass die Sperrklappe in einer möglichst weit von dem Öffnungsrand weg verschwenkten Öffnungsposition eng an der Innenwand des umgebenden Strömungskanals anliegt, wobei in Umfangsrichtung der Verlauf der Innenwand dem äußeren Umfangsrand des Dichtungsflansches entspricht.

Es hat sich gezeigt, dass eine nicht rotationssymetrisch ausgebildete Sperrklappe besonders vorteilhafte Eigenschaften aufweist. Ein Mittelpunkt der domartigen Wölbung ist zweckmäßigerweise zwischen einer Mittelachse des hülsenförmigen Gehäuses und dem Scharnierbereich des Öffnungsrands ausgebildet. Die Wölbung selbst ist zweckmäßigerweise so vorgegeben, dass durch die in der Öffnungsposition angeordneten Sperrklappe eine in der Ausströmungsrichtung durch das hülsenförmige Gehäuse hindurch strömende Luftströmung möglichst wenig behindert wird und möglichst wenig Wirbel bei dem Umströmen der in der Öffnungsposition befindlichen Sperrklappe erzwungen werden.

Um auch bei einer zunehmenden Verschmutzung des Strömungskanals eine möglichst zuverlässige Funktionsweise der Rückstromsperrvorrichtung zu begünstigen ist optional vorgesehen, dass an einer von dem Gehäuse weg gerichteten Außenseite der Sperrklappe ein nach außen vorspringendes Anschlagsbegrenzungselement ausgebildet ist, welches durch einen Anschlag an eine Innenwand des umgebenden Strömungskanals eine Schwenkbewegung der Sperrklappe in die Öffnungsposition begrenzt. Mit dem nach außen vorspringenden Anschlagsbegrenzungselement kann verhindert werden, dass die Außenseite der Sperrklappe großflächig an der Innenwand des umgebenden Strömungskanals anliegt und im Falle einer Verschmutzung der Innenwand des umgebenden Strömungskanals an der Innenwand des Strömungskanals anhaftet.

Nachfolgend wird ein exemplarisches Ausführungsbeispiel des Erfindungsgedankens näher erläutert, welches in der Zeichnung dargestellt ist. Es zeigt:
Figur 1 eine Seitenansicht einer Rückstromsperrvorrichtung für einen von einer Luftströmung durchströmten Strömungskanal,
Figur 2 eine perspektivische Seitenansicht der Rückstromsperrvorrichtung,
Figur 3 eine weitere Seitenansicht der in den Figuren 1 und 2 gezeigten Rückstromsperrvorrichtung aus einer anderen Richtung, wobei ein Scharnierbereich und eine Einbuchtung mit einer Kondensatkammer sichtbar sind,
Figur 4 eine perspektivische Ansicht der Rückstromsperrvorrichtung,
Figur 5 eine Ansicht durch die Rückstromsperrvorrichtung in einer Ausströmungsrichtung von einer dem Betrachter zugewandten Einströmungsöffnung durch ein Gehäuse der Rückstromsperrvorrichtung hindurch, wobei eine in einer Öffnungsposition befindliche Sperrklappe in eine von dem Betrachter abgewandte Ausströmungsöffnung hineinragt,
Figur 6 eine Seitenansicht der Rückstromsperrvorrichtung, wobei die Sperrklappe in einer die Rückstromsperrvorrichtung versperrenden Sperrposition dargestellt ist,
Figur 7 eine Schnittansicht der Rückstromsperrvorrichtung, die in einem schematisch dargestellten umgebenden Strömungskanal angeordnet ist,
Figur 8 eine Seitenansicht des Gehäuses der Rückstromsperrvorrichtung ohne die schwenkbar daran gelagerte Sperrklappe,
Figur 9 eine Seitenansicht der Sperrklappe,
Figur 10 eine weitere Seitenansicht der Sperrklappe aus einer anderen Richtung,
Figur 11 eine Seitenansicht einer abweichenden Ausgestaltung einer Rückstromsperrvorrichtung mit einer einstückig aus einem elastischen Kunststoffmaterial hergestellten Sperrklappe,
Figur 12 eine Schnittansicht durch die in Figur 11 gezeigte Rückstromsperrvorrichtung längs einer Schnittebene XII-XII in Figur 11,
Figur 13 eine Draufsicht auf das Gehäuse der Rückstromsperrvorrichtung entgegen der Ausströmungsrichtung, wobei die Sperrklappe zur Verdeutlichung nicht dargestellt ist,
Figur 14 eine Draufsicht auf die Sperrklappe der in den Figuren 11 und 12 dargestellten Rückstromsperrvorrichtung, und
Figur 15 eine Schnittansicht durch die in Figur 14 dargestellte Sperrklappe.

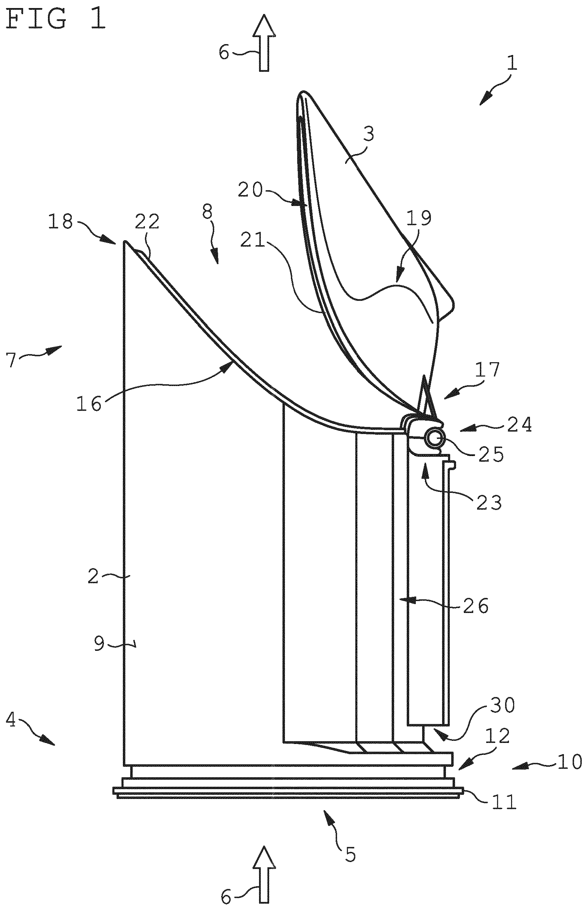

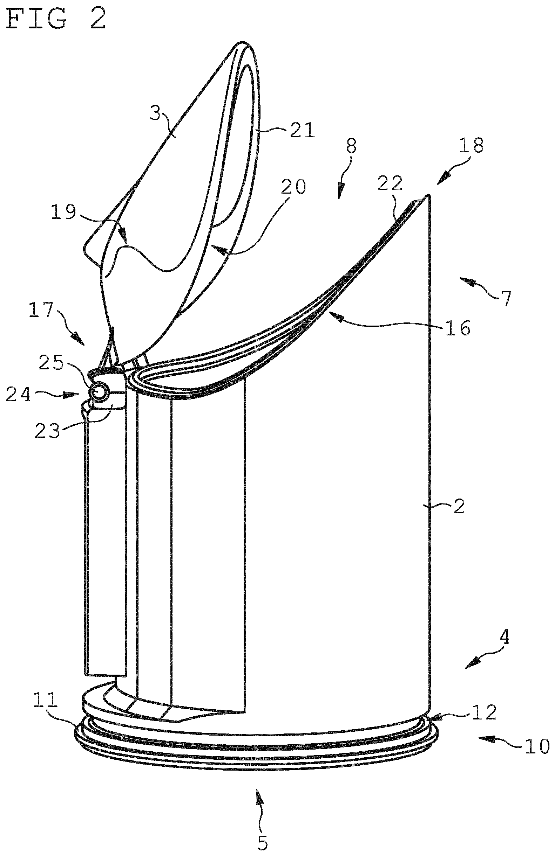

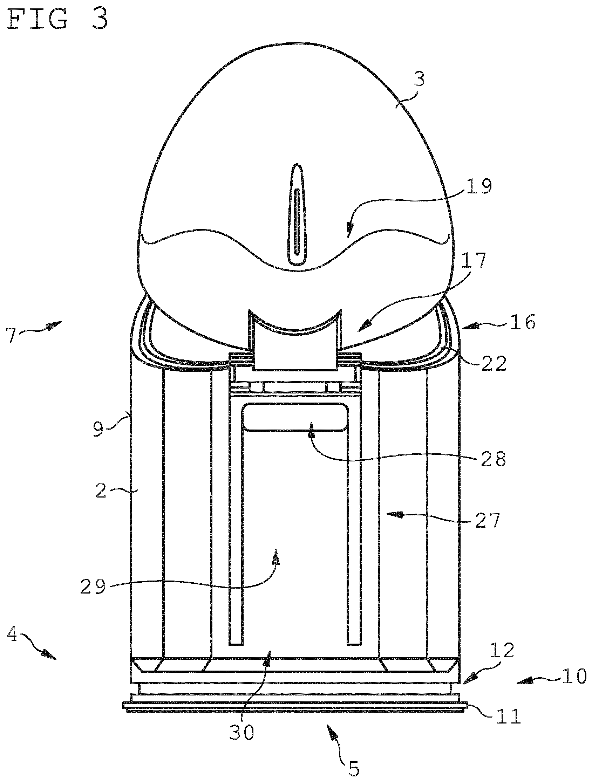

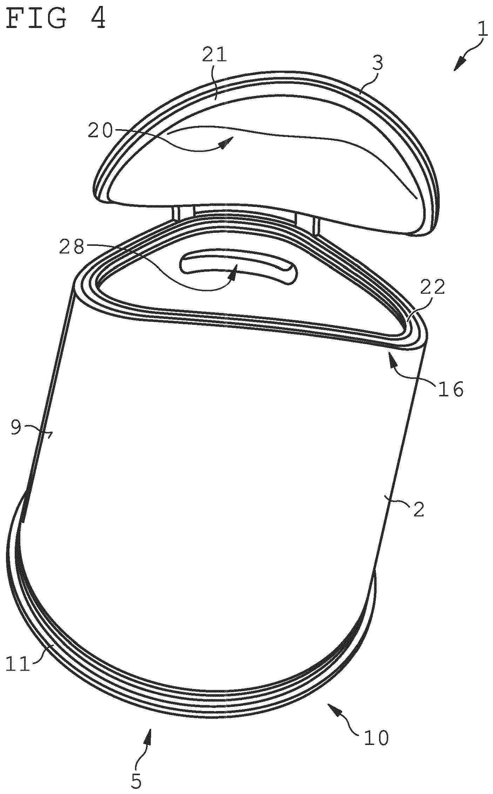

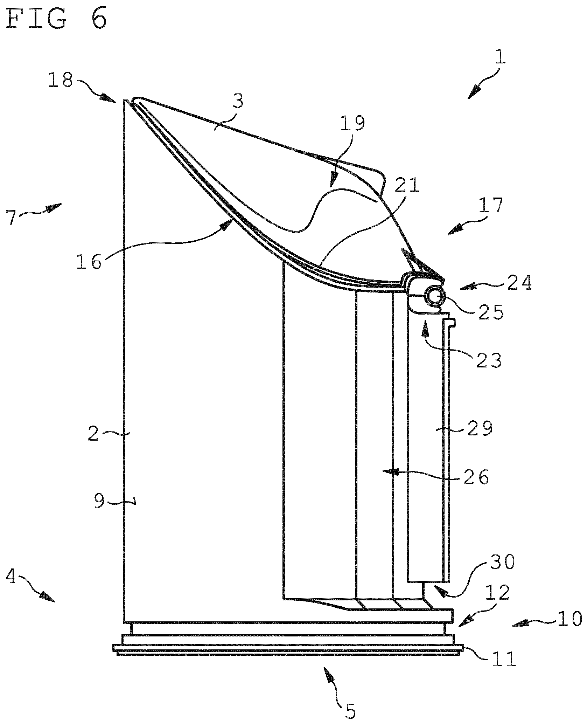

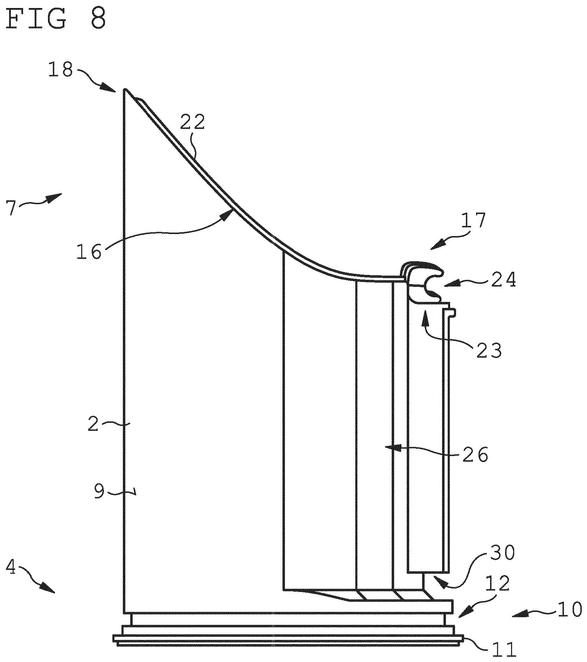

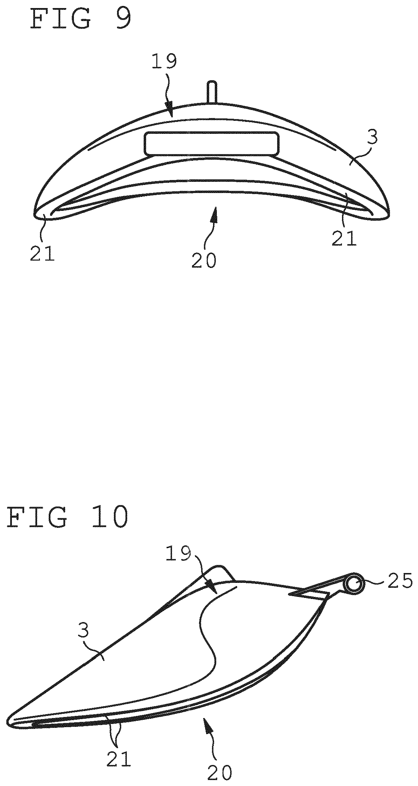

Eine in den Figuren 1 bis 10 in verschiedenen Ansichten sowie geöffnet oder verschlossen dargestellte Rückstromsperrvorrichtung 1 weist ein hülsenförmiges Gehäuse 2 und eine schwenkbar an dem hülsenförmigen Gehäuse 2 gelagerte Sperrklappe 3 auf. Das Gehäuse 2 weist an einem ersten Ende 4 eine Einströmungsöffnung 5 für eine in einer Ausströmungsrichtung durch das hülsenförmige Gehäuse 2 hindurch strömende Luftströmung auf. Die Ausströmungsrichtung ist durch zwei Pfeile 6 in Figur 1 angedeutet. An einem dem ersten Ende 4 gegenüberliegenden zweiten Ende 7 weist das hülsenförmige Gehäuse 2 eine Ausströmungsöffnung 8 auf. Die Ausströmungsöffnung 8 kann mit der schwenkbar gelagerten Sperrklappe 3 freigegeben werden, wie es beispielsweise in den Figuren 1 bis 5 sowie 7 dargestellt ist, oder aber verschlossen werden, wie es in Figur 6 dargestellt ist.

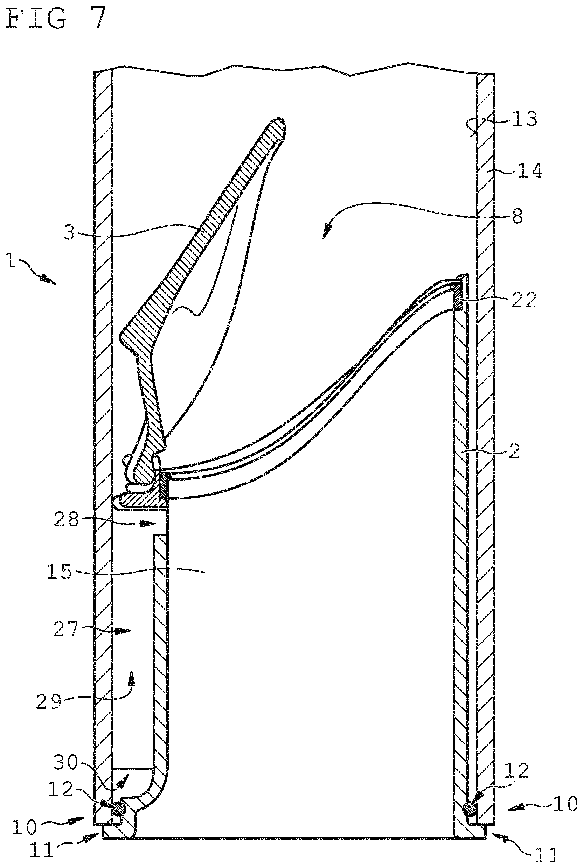

An dem ersten Ende 4 ist angrenzend an die Einströmungsöffnung 5 ein in Umfangsrichtung um eine Außenwand 9 des Gehäuses 2 verlaufende Dichtungsflansch 10 ausgebildet. Der Dichtungsflansch 10 weist einen in radialer Richtung über die Außenwand 9 vorspringenden äußeren Umfangsrand 11 sowie unmittelbar benachbart eine ebenfalls in Umfangsrichtung um das Gehäuse 2 verlaufende Dichtungsnut 12 zur Aufnahme einer O-Ring-Dichtung auf. Mit dem Dichtungsflansch 10 kann das Gehäuse 2 der Rückstromsperrvorrichtung 1 an einer Innenwand 13 eines umgebenden Strömungskanals 14 so angeordnet und festgelegt werden, dass eine durch den Strömungskanal 14 hindurch strömende Luftströmung durch einen Innenraum 15 des Gehäuses 2 hindurch strömen muss und nicht seitlich zwischen der Außenwand 9 des Gehäuses 2 und der Innenwand 13 des umgebenden Strömungskanals 14 entlang strömen kann, wie es in Figur 7 angedeutet ist. Durch den radial nach außen vorspringenden Umfangsrand 11 wird bei einer Montage der Rückstromsperrvorrichtung 1 beziehungsweise bei einem Einschieben der Rückstromsperrvorrichtung 1 in einen Rohrabschnitt des Strömungskanals 14 ein Anschlag gebildet und eine Tiefenbegrenzung für die eingeschobene Rückstromsperrvorrichtung 1 vorgegeben, wodurch eine fehlerfreie und zuverlässige rasche Montage erleichtert wird und zudem ein unerwünschtes und die Funktionsweise der schwenkbar gelagerten Sperrklappe 3 behinderndes Verkippen der Rückstromsperrvorrichtung 1 innerhalb des Strömungskanals 14 verhindert wird. Der in radialer Richtung gemessene Abstand zwischen dem hülsenförmigen Gehäuse 2 und dem umgebenden Strömungskanal 14 ist zur Verdeutlichung in Figur 7 vergleichsweise groß dargestellt und kann in der Praxis wesentlich geringer sein, beziehungsweise lediglich 0,1 mm oder 0,2 mm betragen.

Die Ausströmungsöffnung 8 weist einen die Ausströmungsöffnung 8 begrenzenden Öffnungsrand 16 auf. Der Öffnungsrand 16 weist einen Scharnierbereich 17 auf, in welchem die Sperrklappe 3 schwenkbar an dem Gehäuse 2 gelagert ist. Der Öffnungsrand 16 geht ausgehend von dem Scharnierbereich 17 in einen in Umfangsrichtung gegenüberliegend angeordneten Sperrklappenanschlagbereich 18 über. Der Sperrklappenanschlagbereich 18 ist in der Ausströmungsrichtung relativ zu dem Scharnierbereich 17 versetzt angeordnet, wobei der Öffnungsrand 16 in dem Sperrklappenanschlagbereich 18 einen größeren Abstand zu der Einströmungsöffnung 5 und dem Dichtungsflansch 10 als der gegenüberliegende Scharnierbereich 17 aufweist. Der Öffnungsrand 16 weist demzufolge nicht nur in Umfangsrichtung, sondern auch in Ausströmungsrichtung einen gekrümmten Verlauf auf. Dieser gekrümmte Verlauf des Öffnungsrandes 16 ist beispielsweise in Figur 1 deutlich erkennbar.

Die Sperrklappe 3 weist eine domförmige Wölbung 19 mit einem in Ausströmungsrichtung vorgewölbten Innenbereich 20 auf. Ein Umfangsrand 21 der Sperrklappe 3 ist an den Verlauf des Öffnungsrands 16 der Ausströmungsöffnung 8 angepasst, sodass die Sperrklappe 3 die Ausströmungsöffnung 8 des hülsenförmigen Gehäuses 2 in einer an dem Öffnungsrand 16 anliegenden Sperrposition dicht verschließt, wie es exemplarisch in Figur 6 dargestellt ist. Um eine Dichtwirkung der Rückstromsperrvorrichtung 1 in einer absperrenden Sperrposition der Sperrklappe 3 zu erhöhen ist entlang des Öffnungsrands 16 eine Sperrklappendichtung 22 aus einem elastischen Dichtungsmaterial angeordnet.

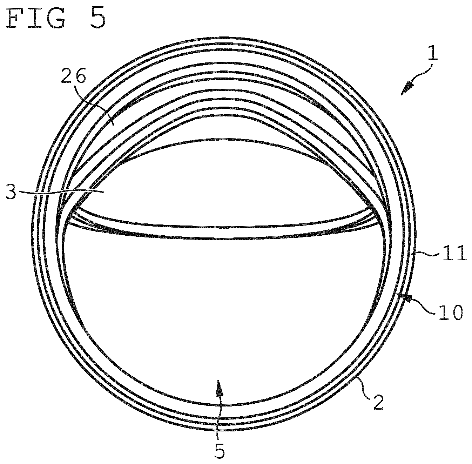

Die Formgebung der Sperrklappe 3 und insbesondere die domförmige Wölbung 19 sowie der Umfangsrand 21, der ebenso wie der Öffnungsrand 16 einen sowohl in Umfangsrichtung als auch in Ausströmungsrichtung gekrümmten Verlauf aufweist, ist derart vorgegeben, dass die Sperrklappe 3 innerhalb des umgebenden Strömungskanals 14 möglichst weit weg von dem Öffnungsrand 16 in eine Öffnungsposition verschwenkt werden kann, in welcher sie eine in der Ausströmungsrichtung durch das Gehäuse 2 hindurch strömende Luftströmung möglichst wenig behindert und einen für die durchströmende Luftströmung zur Verfügung stehende Durchströmungsquerschnittsfläche, wie sie beispielsweise in Figur 5 in dem Innenraum 15 des Gehäuses 2 zur Verfügung steht, möglichst wenig einschränkt. Die Formgebung der Sperrklappe 3 ist darüber hinaus so angepasst und vorgegeben, dass bei einem Umströmen der Sperrklappe 3 durch die in der Ausströmungsrichtung durch die Rückstromsperrvorrichtung 1 hindurch strömende Luftströmung mit möglichst geringen Verwirbelungen an der in der Öffnungsposition befindlichen Sperrklappe 3 vorbei strömen kann.

Das Gehäuse 2 weist in dem Scharnierbereich 17 zwei beabstandet zueinander angeordnete Scharnierbolzenaufnahmeelemente 23 auf. Jedes Scharnierbolzenaufnahmeelement 23 weist eine radial nach außen gerichtete Scharnierbolzenaufnahmeöffnung 24 auf. An der Sperrklappe 3 sind zwei Scharnierbolzenabschnitte 25 ausgebildet, mit welchen die Sperrklappe 3 durch die Scharnierbolzenaufnahmeöffnung 24 in das Scharnierbolzenaufnahmeelement 23 eingeführt werden kann. Die Scharnierbolzenabschnitte 25 sind rastend in den Scharnierbolzenaufnahmeelementen 23 aufgenommen und zurückgehalten. Zudem ist die Sperrklappe 3 über die Scharnierbolzenabschnitte 25 schwenkbar in den Scharnierbolzenaufnahmeelementen 23 gelagert. Ein Abstand der Scharnierbolzenaufnahmeöffnungen 24 der Scharnierbolzenaufnahmeelemente 23 zu der Innenwand 13 des umgebenden Strömungskanals 14 ist geringer als ein Durchmesser der Scharnierbolzenabschnitte 25, sodass sich die Sperrklappe 3 in einem dem Strömungskanal 14 montierten Zustand der Rückstromsperrvorrichtung 1 nicht mehr vollständig aus den Scharnierbolzenaufnahmeelementen 23 herauslösen kann. Dadurch wird die Betriebssicherheit der Rückstromsperrvorrichtung 1 erhöht.

Das hülsenförmige Gehäuse 2 weist in Umfangsrichtung im Bereich des Scharnierbereichs 17 erfindungsgemäß eine Einbuchtung 26 auf, die neben der Ausströmungsöffnung 8 angeordnet ist und nicht von der Sperrklappe 3 in deren Sperrposition verschlossen wird. Die Einbuchtung 26 bildet bei dem in den umgebenden Strömungskanal 14 eingesetzten Gehäuse 2 eine Kondensatkammer 27, die aus einer der Ausströmungsrichtung entgegengesetzten Richtung zugänglich ist. Die Einbuchtung 26 erstreckt sich in axialer Richtung von einer Außenseite des Öffnungsrands 16, beziehungsweise von der Ausströmungsöffnung 8 in Richtung der Einströmungsöffnung 5 bis in die unmittelbare Nähe des Dichtungsflansches 10. In der Kondensatkammer 27 kann sich flüssiges Kondensat ansammeln, das entgegen der Ausströmungsrichtung an der Innenwand 13 des umgebenden Strömungskanals 14 in Richtung der Rückstromsperrvorrichtung 1 herabrinnt, wie es bei einer in einem vertikal verlaufenden Abgaskanal angeordneten Rückstromsperrvorrichtung 1 als Bestandteil einer Abgasanlage häufig der Fall ist.

In der Einbuchtung 26 ist in der Nähe des Öffnungsrandes 16 der Ausströmungsöffnung 8 erfindungsgemäß eine Durchflussöffnung 28 ausgebildet, durch welche das Kondensat, welches sich in der von der Einbuchtung 26 begrenzten Kondensatkammer 27 ansammelt, unter Umgehung der Sperrklappe 3 in den Innenraum 15 des Gehäuses 2 und anschließend aus dem Gehäuse 2 heraus abfließen kann. Um zu vermeiden, dass die Durchflussöffnung 28 auch für eine entgegen der Ausströmungsrichtung an die versperrte Rückstromsperrvorrichtung 1 anströmende Gegenluftströmung zugänglich ist und eine unerwünschte Umgebung der verschlossenen Sperrklappe 3 ermöglicht ist in der Kondensatkammer 27 ein luftdichter Durchflussöffnungskanal 29 ausgebildet, der sich in axialer Richtung von der von dem Durchflussöffnungskanal 29 umgebenen Durchflussöffnung 28 in Richtung des Dichtungsflansches 10 erstreckt und in unmittelbarer Nähe des Dichtungsflansches 10 in eine Durchflussöffnungskanalmündung 30 mündet. Sobald sich in der Kondensatkammer 27 eine geringe Kondensatmenge ansammelt, ein Kondensatpegel in axialer Richtung von dem Dichtungsflansch 10 ansteigend bis über die Durchflussöffnungskanalmündung 30 an und verschließt damit den Durchflussöffnungskanal. Mit einer zunehmenden Ansammlung von Kondensat in der Kondensatkammer 27 steigt der Kondensatpegel in der Kondensatkammer 27 und in dem Durchflussöffnungskanal 29 an, bis der Kondensatpegel die Durchflussöffnung 28 erreicht und das in der Kondensatkammer 27 sich ansammelnde Kondensat durch die Durchflussöffnung 28 in den Innenraum 15 des Gehäuses 2 abfließen kann. Der Durchflussöffnungskanal 29 bildet demzufolge einen Siphon und versperrt die Durchflussöffnung 28 für eine entgegen der Ausströmungsrichtung an die Rückstromsperrvorrichtung 1 anströmende Gegenluftströmung.

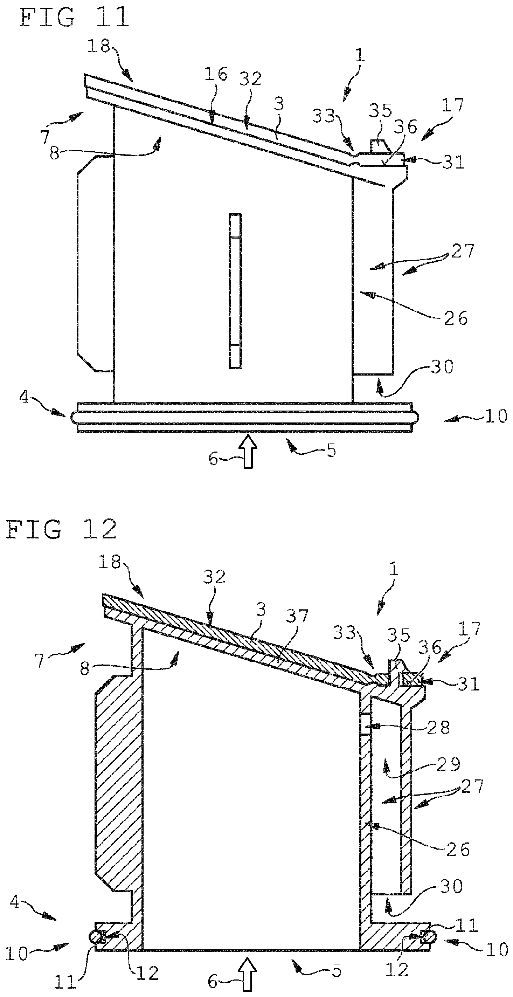

In den Figuren 11 bis 15 ist eine abweichende Ausgestaltung einer ebenfalls erfindungsgemäßen Rückstromsperrvorrichtung 1 exemplarisch und schematisch abgebildet. Es werden im Folgenden überwiegend nur Merkmale dieser Rückstromsperrvorrichtung 1 beschrieben, die abweichend zu der in den Figuren 1 bis 10 gezeigten Variante ausgestaltet sind.

Das Gehäuse 2 weist Öffnungsrand 16 der Ausströmungsöffnung 8 auf, der in einer Ebene verläuft, die in einem Winkel von etwa 80 Grad zu der Ausströmungsrichtung 6 geneigt ist. Bei einer Anordnung der Rückstromsperrvorrichtung 1 in einem vertikal verlaufenden Leitungsabschnitt ist dann die Ebene, in welcher der Öffnungsrand 16 verläuft, um etwa 10 Grad gegenüber einer waagrechten Ebene geneigt.

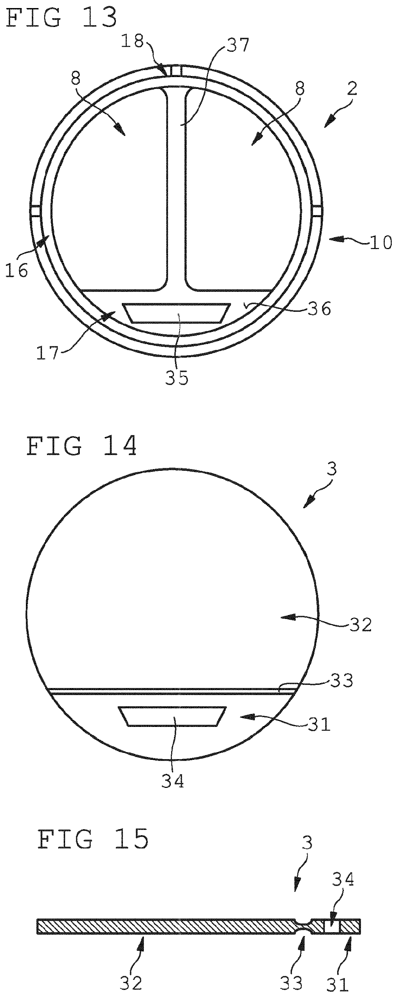

Die Sperrklappe 3 ist einstückig aus einem elastischen Kunststoffmaterial wie beispielsweise aus einem geeigneten Fluorelastomer hergestellt. In den Figuren 14 und 15 ist die Sperrklappe 3 in Alleinstellung ohne das Gehäuse der Rückstromsperrklappe 1 dargestellt. Die Sperrklappe 3 weist einen Festlegungsabschnitt 31 und einen Schwenkklappenabschnitt 32 auf. Der Schwenkklappenabschnitt 32 ist über ein Filmscharnier 33 mit dem Festlegungsabschnitt 31 verbunden. In dem Festlegungsabschnitt 31 ist eine Ausnehmung 34 ausgebildet, um den Festlegungsabschnitt 31 mit einer durch diese Ausnehmung 34 hindurchragenden Klemmnase 35 an dem Scharnierbereich 17 an dem Öffnungsrand 16 festzulegen. Der Scharnierbereich 17 weist eine ebenflächige Kontaktfläche 36 auf, die in einem Winkel zu der Ebene ausgerichtete ist, in welcher der Öffnungsrand 16 verläuft. Durch die Festlegung des Festlegungsabschnitts 31 der Sperrklappe 3 auf der Kontaktfläche 36 des Scharnierbereichs 17 wird der an dem Öffnungsrand 16 anliegende Schwenkklappenabschnitt 32 der Schwenkklappe 3 elastisch verformt. Die dadurch erzeugte Rückstellkraft drückt den Schwenkklappenabschnitt 32 an den Öffnungsrand 16 und verschließt die Ausströmungsöffnung 8.

Das Gehäuse 2 weist weiterhin einen sich quer über die Ausströmungsöffnung 8 und zwischen einander gegenüberliegenden Randbereichen des Öffnungsrands 16 erstreckenden Auflagesteg 37 auf. Die Sperrklappe 3 liegt bei einem an dem Öffnungsrand 16 anliegenden Schwenkklappenabschnitt 32 in einem etwa mittig verlaufenden Streifenbereich auf dem Auflagesteg 37 auf. Durch den Auflagesteg 37 wird eine unerwünschte Verformung des elastisch verformbaren Schwenkklappenabschnitts 32 bei einer entgegen der Ausströmungsrichtung 6 gerichteten Gegenströmung in das Gehäuse 2 hinein verhindert und ein zuverlässiger Verschluss der Ausströmungsöffnung 8 bewirkt, bzw. unterstützt.

## Patentansprüche

1. Rückstromsperrvorrichtung (1) für einen von einer Luftströmung durchströmten Strömungskanal (14) mit einem von der Luftströmung in einer Ausströmungsrichtung durchströmbaren Gehäuse (2) mit einer Ausströmungsöffnung (8), die mit einer schwenkbar an dem Gehäuse (2) gelagerten Sperrklappe (3) verschließbar ist, wobei das Gehäuse (2) hülsenförmig ausgebildet ist und der Ausströmungsöffnung (8) gegenüberliegend eine Einströmungsöffnung (5) aufweist, wobei das Gehäuse (2) mit einem in Umfangsrichtung um eine Außenwand (9) des Gehäuses (2) verlaufenden Dichtungsflansch (10) in einem hohlzylindrischen Strömungskanal (14) angeordnet werden kann, sodass eine durch den Strömungskanal (14) hindurchströmende Luftströmung in Ausströmungsrichtung (6) durch die Einströmungsöffnung (5) in das Gehäuse (2) einströmt und durch die Ausströmungsöffnung (8) aus dem Gehäuse (2) ausströmt, wobei die Sperrklappe (3) in einer Sperrposition die Ausströmungsöffnung (8) verschließend an einem Öffnungsrand (16) anliegt und eine unerwünschte Rückströmung gegen die Ausströmungsrichtung (6) in die Ausströmungsöffnung (8) hinein verhindert, wobei die Sperrklappe (3) in einer Öffnungsposition von dem Öffnungsrand (16) weg verschwenkt ist und die Ausströmungsöffnung (8) für eine in der Ausströmungsrichtung (6) durch das Gehäuse (2) hindurchströmende Luftströmung freigibt, und wobei der Öffnungsrand (16) der Ausströmungsöffnung (8) einen Scharnierbereich (17) aufweist, in welchem die Sperrklappe (3) schwenkbar an dem Gehäuse (2) gelagert ist, der in einen in Umfangsrichtung gegenüberliegend angeordneten Sperrklappenanschlagbereich (18) übergeht, der in Ausströmungsrichtung (6) versetzt ausgebildet ist, **dadurch gekennzeichnet, dass** das Gehäuse (2) in Umfangsrichtung eine Einbuchtung (26) aufweist, die neben der Ausströmungsöffnung (8) angeordnet ist und nicht von der Sperrklappe (3) verschlossen wird, sodass die Einbuchtung (26) bei einem in den umgebenden Strömungskanal (14) eingesetzten Gehäuse (2) eine Kondensatkammer bildet (27), die aus einer der Ausströmungsrichtung (6) entgegengesetzten Richtung zugänglich ist, und dass in der Einbuchtung (26) in der Nähe des Öffnungsrandes (16) der Ausströmungsöffnung (8) eine Durchflussöffnung (28) angeordnet ist, durch welche ein Kondensat, welches sich in der von der Einbuchtung (26) begrenzten Kondensatkammer (27) ansammelt, unter Umgehung der Sperrklappe (3) in einen Innenraum des Gehäuses (2) fließen kann.

2. Rückstromsperrvorrichtung (1) nach Anspruch 1, **dadurch gekennzeichnet, dass** die Sperrklappe (3) aus einem elastischen Kunststoffmaterial hergestellt ist und so ausgebildet und an dem Gehäuse (2) gelagert ist, dass die Ausströmungsöffnung (8) ohne eine hindurchströmende Luftströmung mit der elastisch vorgespannten Sperrklappe (3) verschlossen ist.

3. Rückstromsperrvorrichtung (1) nach Anspruch 2, **dadurch gekennzeichnet, dass** die Sperrklappe (3) einen Festlegungsabschnitt (31) zum Festlegen der Sperrklappe auf oder an dem Scharnierbereich (17) des Öffnungsrands (16) sowie einen Schwenkklappenabschnitt (32) aufweist, der über ein Filmscharnier (33) mit dem Festlegungsabschnitt (31) verbunden ist.

4. Rückstromsperrvorrichtung (1) nach Anspruch 2 oder Anspruch 3, **dadurch gekennzeichnet, dass** in Ausströmungsrichtung (6) vor der Sperrklappe (3) ein Auflagesteg (37) angeordnet ist, auf welchem die nicht verschwenkte Sperrklappe (3) aufliegt, und der sich quer über die Ausströmungsöffnung (8) erstreckt und dadurch bei einer entgegen der Ausströmungsöffnung (8) gerichteten Rückströmung ein unerwünschtes Verschwenken oder Verformen der elastischen Sperrklappe (3) entgegen der Ausströmungsrichtung (6) verhindert.

5. Rückstromsperrvorrichtung (1) nach einem der voranstehenden Ansprüche, **dadurch gekennzeichnet, dass** die Sperrklappe (3) eine domförmige Wölbung (19) mit einem in Ausströmungsrichtung (6) vorgewölbten Innenbereich (20) aufweist.

6. Rückstromsperrvorrichtung (1) nach einem der voranstehenden Ansprüche, **dadurch gekennzeichnet, dass** der Öffnungsrand (16) einen nicht nur in Umfangsrichtung, sondern auch in Ausströmungsrichtung (6) gekrümmten Verlauf aufweist.

7. Rückstromsperrvorrichtung (1) nach einem der voranstehenden Ansprüche, **dadurch gekennzeichnet, dass** die Sperrklappe (3) über ein Scharnier schwenkbar an dem Gehäuse (2) gelagert ist, wobei das Scharnier in radialer Richtung von einem äußeren Umfangsrand (11) des Dichtungsflanschs (10) nach innen versetzt angeordnet ist.

8. Rückstromsperrvorrichtung (1) nach Anspruch 1 und Anspruch 7, **dadurch gekennzeichnet, dass** das Scharnier mindestens ein an einem Scharnierbolzenaufnahmeelement (23) mit einer radial nach außen gerichteten Scharnierbolzenaufnahmeöffnung (24) aufweist, durch welche hindurch ein Scharnierbolzen (25) einführbar ist und in dem Scharnierbolzenaufnahmeelement (23) schwenkbar lagerbar ist, wobei die Scharnierbolzenaufnahmeöffnung (24) in radialer Richtung näher als ein Durchmesser des Scharnierbolzens (25) an dem äußeren Umfangsrand (11) des Dichtungsflanschs (10) angeordnet ist.

9. Rückstromsperrvorrichtung (1) nach einem der voranstehenden Ansprüche, **dadurch gekennzeichnet, dass** die Einbuchtung (26) in Umfangsrichtung in dem Scharnierbereich (17) angeordnet ist und sich in einer axialen Richtung von einer Außenseite des Öffnungsrands (16) der Ausströmungsöffnung (8) in Richtung der Einströmungsöffnung (5) erstreckt.

10. Rückstromsperrvorrichtung (1) nach einem der voranstehenden Ansprüche, **dadurch gekennzeichnet, dass** sich ein luftdichter Durchflussöffnungskanal (29) in der Kondensatkammer (27) von der Durchflussöffnung (28) in Richtung des Dichtungsflansches (10) erstreckt und eine Durchflussöffnungskanalmündung (30) in einem Abstand von der Durchflussöffnung (28) in der Kondensatkammer (27) angeordnet ist.

11. Rückstromsperrvorrichtung (1) nach einem der voranstehenden Ansprüche, **dadurch gekennzeichnet, dass** eine Wölbung (19) der Sperrklappe (3) derart an einen äußeren Umfangsrand (11) des Dichtungsflanschs (10) angepasst ist, dass die Sperrklappe (3) in der Öffnungsposition möglichst weit von dem Öffnungsrand (16) weg verschwenkbar ist, ohne in radialer Richtung an den äußeren Umfangsrand (11) heranzuragen.

12. Rückstromsperrvorrichtung (1) nach einem der voranstehenden Ansprüche, **dadurch gekennzeichnet, dass** an einer von dem Gehäuse (2) weg gerichteten Außenseite der Sperrklappe (3) ein nach außen vorspringendes Anschlagsbegrenzungselement ausgebildet ist, welches durch einen Anschlag an eine Innenwand (13) des umgebenden Strömungskanals (14) eine Schwenkbewegung der Sperrklappe (3) in die Öffnungsposition begrenzt.

## Claims

1. Non-return device (1) for a flow channel (14) through which an airflow flows, comprising a housing (2), through which the airflow can flow in an outflow direction, with an outflow opening (8) which can be closed by a check valve (3) that is pivotably mounted on the housing (2), wherein the housing (2) is configured to be sleeve-shaped and comprises an inflow opening (5) opposite the outflow opening (8), wherein the housing (2) can be arranged with a sealing flange (10), extending in a peripheral direction around an outside wall (9) of the housing (2), in a hollow-cylindrical flow channel (14), such that an airflow flowing through the flow channel (14) in the outflow direction (6) flows into the housing (2) through the inflow opening (5) and flows out of the housing (2) through the outflow opening (8), wherein the check valve (3) rests on the outflow opening (8) in a closing manner on an opening edge (16) in a blocking position and prevents an undesired return flow, counter to the outflow direction (6), into the outflow opening (8), wherein the check valve (3) is pivoted away from the opening edge (16) in an opening position and releases the outflow opening (8) for an airflow flowing through the housing (2) in the outflow direction (6), and wherein the opening edge (16) of the outflow opening (8) comprises a hinge region (17) in which the check valve (3) is mounted pivotably on the housing (2), which transitions into a check valve stop region (18) arranged opposite in the peripheral direction, which region is configured to be offset in the outflow direction (6), **characterised in that** the housing (2) comprises a recess (26) in the peripheral direction, which is arranged beside the outflow opening (8) and is not closed by the check valve (3), such that the recess (26) forms (27) a condensate chamber when a housing (2) is inserted into the surrounding flow channel (14), which chamber is accessible from a direction opposite to the outflow direction (6), and **in that** a through-flow opening (28) is arranged in the recess (26) in the vicinity of the opening edge (16) of the outflow opening (8), through which through-flow opening a condensate, which collects in the condensate chamber (27) delimited by the recess (26), can flow into an interior of the housing (2), bypassing the check valve (3).

2. Non-return device (1) according to claim 1, **characterised in that** the check valve (3) is produced from a resilient plastics material and is configured and is arranged on the housing (2) in such a way that the outflow opening (8) is closed with the resiliently preloaded check valve (3) without an airflow flowing through.

3. Non-return device (1) according to claim 2, **characterised in that** the check valve (3) comprises a fixing portion (31) for fixing the check valve on or at the hinge region (17) of the opening edge (16), and a pivot valve portion (32) which is connected to the fixing portion (31) via a film hinge (33).

4. Non-return device (1) according to claim 2 or claim 3, **characterised in that** a support rib (37) is arranged in front of the check valve (3) in the outflow direction (6), on which rib the non-pivoted check valve (3) rests, and which extends transversely over the outflow opening (8) and thereby prevents an undesired pivoting or deformation of the resilient check valve (3) counter to the outflow direction (6) in the case of a return flow directed counter to the outflow opening (8).

5. Non-return device (1) according to any of the preceding claims, **characterised in that** the check valve (3) has a dome-shaped curvature (19) having an inner region (20) that is bulged in the outflow direction (6).

6. Non-return device (1) according to any of the preceding claims, **characterised in that** the opening edge (16) has a course that is curved not only in the peripheral direction but rather also in the outflow direction (6).

7. Non-return device (1) according to any of the preceding claims, **characterised in that** the check valve (3) is pivotably mounted on the housing (2) via a hinge, wherein the hinge is arranged so as to be offset towards the inside, in the radial direction, from an outer peripheral edge (11) of the sealing flange (10).

8. Non-return device (1) according to claim 1 and claim 7, **characterised in that** the hinge comprises at least one on a hinge bolt receiving opening (23) having a radially outwardly directed hinge bolt receiving opening (24), through which a hinge bolt (25) can be inserted and in which the hinge bolt receiving element (23) can be pivotably mounted, wherein the hinge bolt receiving opening (24) is arranged, in the radial direction, closer than a diameter of the hinge bolt (25) to the outer peripheral edge (11) of the sealing flange (10).

9. Non-return device (1) according to any of the preceding claims, **characterised in that** the recess (26) is arranged in the hinge region (17), in the peripheral direction, and extends in an axial direction from an outer side of the opening edge (16) of the outflow opening (8) in the direction of the inflow opening (5).

10. Non-return device (1) according to any of the preceding claims, **characterised in that** an airtight through-flow opening channel (29) extends in the condensate chamber (27) from the through-flow opening (28) in the direction of the sealing flange (10), and a through-flow opening channel mouth (30) is arranged in the condensate chamber (27) at a spacing from the through-flow opening (28).

11. Non-return device (1) according to any of the preceding claims, **characterised in that** a curvature (19) of the check valve (3) is adjusted to an outer peripheral edge (11) of the sealing flange (10) in such a way that the check valve (3) is pivotable as far as possible away from the opening edge (16), in the opening position, without protruding in the radial direction at the outer peripheral edge (11).

12. Non-return device (1) according to any of the preceding claims, characterised I that an outwardly protruding stop limitation element is formed on an outer side of the check valve (3) directed away from the housing (2), which stop limitation element limits a pivot movement of the check valve (3) into the opening position, by a stop on an inside wall (13) of the surrounding flow channel (14).

## Revendications

1. Dispositif anti-retour (1) pour un canal d'écoulement (14) traversé par un écoulement d'air, avec un boîtier (2) pouvant être traversé par l'écoulement d'air dans une direction d'écoulement de sortie, avec une ouverture d'écoulement de sortie (8) qui peut être fermée par un clapet de blocage (3) monté de manière pivotante sur le boîtier (2), où le boîtier (2) est réalisé en forme de manchon et présente une ouverture d'écoulement d'entrée (5) opposée à l'ouverture d'écoulement de sortie (8), où le boîtier (2) peut être agencé avec une bride d'étanchéité (10) s'étendant dans la direction circonférentielle autour d'une paroi extérieure (9) du boîtier (2) dans un canal d'écoulement cylindrique creux (14), de telle sorte qu'un écoulement d'air s'écoulant à travers le canal d'écoulement (14) dans la direction d'écoulement de sortie (6) s'écoule dans le boîtier (2) à travers l'ouverture d'écoulement d'entrée (5) et s'écoule hors du boîtier (2) à travers l'ouverture d'écoulement de sortie (8), où le clapet de blocage (3) s'applique dans une position de blocage contre un bord d'ouverture (16) en fermant l'ouverture d'écoulement de sortie (8) et empêche un écoulement de retour indésirable à l'encontre de la direction d'écoulement de sortie (6) dans l'ouverture d'écoulement de sortie (8), où le clapet de blocage (3) est pivoté dans une position d'ouverture à l'écart du bord d'ouverture (16) et libère l'ouverture d'écoulement de sortie (8) pour un écoulement d'air s'écoulant à travers le boîtier (2) dans la direction d'écoulement de sortie (6), et où le bord d'ouverture (16) de l'ouverture d'écoulement de sortie (8) présente une zone de charnière (17) dans laquelle le clapet de blocage (3) est monté de manière pivotante sur le boîtier (2), qui se prolonge par une zone de butée de clapet de blocage (18) agencée à l'opposé dans la direction circonférentielle, qui est réalisée en décalage dans la direction d'écoulement de sortie (6), **caractérisé en ce que** le boîtier (2) présente dans la direction circonférentielle un creux (26) qui est agencé à côté de l'ouverture d'écoulement de sortie (8) et qui n'est pas fermé par le clapet de blocage (3), de telle sorte que le creux (26) forme, lorsque le boîtier (2) est inséré dans le canal d'écoulement environnant (14), une chambre de condensat (27) qui est accessible dans une direction opposée à la direction d'écoulement de sortie (6), et **en ce qu'**une ouverture de passage (28) est agencée dans le creux (26) à proximité du bord d'ouverture (16) de l'ouverture d'écoulement de sortie (8), à travers laquelle un condensat qui s'accumule dans la chambre de condensat (27) délimitée par le creux (26) peut s'écouler dans un espace intérieur du boîtier (2) en contournant le clapet de blocage (3).

2. Dispositif anti-retour (1) selon la revendication 1, **caractérisé en ce que** le clapet de blocage (3) est fabriqué dans un matériau plastique élastique et est réalisé et monté sur le boîtier (2) de telle sorte que l'ouverture d'écoulement de sortie (8) sans écoulement d'air qui la traverse est fermée par le clapet de blocage (3) précontraint élastiquement.

3. Dispositif anti-retour (1) selon la revendication 2, **caractérisé en ce que** le clapet de blocage (3) présente une section de fixation (31) pour fixer le clapet de blocage sur ou au niveau de la zone de charnière (17) du bord d'ouverture (16) ainsi qu'une section de clapet pivotant (32) qui est reliée à la section de fixation (31) par l'intermédiaire d'une charnière à film (33).

4. Dispositif anti-retour (1) selon la revendication 2 ou la revendication 3, **caractérisé en ce qu'**une nervure d'appui (37) est agencée avec le clapet de blocage (3) dans la direction d'écoulement de sortie (6), sur laquelle repose le clapet de blocage (3) non pivoté et qui s'étend transversalement à l'ouverture d'écoulement de sortie (8) et empêche ainsi, en cas d'écoulement de retour dirigé à l'encontre de l'ouverture d'écoulement de sortie (8), un pivotement ou une déformation indésirable du clapet de blocage élastique (3) à l'encontre de la direction d'écoulement de sortie (6).

5. Dispositif anti-retour (1) selon l'une quelconque des revendications précédentes, **caractérisé en ce que** le clapet de blocage (3) présente un bombement en forme de dôme (19) avec une zone intérieure (20) bombée vers l'avant dans la direction d'écoulement de sortie (6).

6. Dispositif anti-retour (1) selon l'une quelconque des revendications précédentes, **caractérisé en ce que** le bord d'ouverture (16) présente un tracé incurvé non seulement dans la direction circonférentielle, mais également dans la direction d'écoulement de sortie (6).

7. Dispositif anti-retour (1) selon l'une quelconque des revendications précédentes, **caractérisé en ce que** le clapet de blocage (3) est monté de manière pivotante sur le boîtier (2) par l'intermédiaire d'une charnière, où la charnière est agencée en décalage vers l'intérieur dans la direction radiale par rapport à un bord circonférentiel extérieur (11) de la bride d'étanchéité (10).

8. Dispositif anti-retour (1) selon la revendication 1 et la revendication 7, **caractérisé en ce que** la charnière présente au moins un élément de réception de goupille de charnière (23) avec une ouverture de réception de goupille de charnière (24) dirigée radialement vers l'extérieur, à travers laquelle une goupille de charnière (25) peut être insérée et peut être montée de manière pivotante dans l'élément de réception de goupille de charnière (23), où l'ouverture de réception de goupille de charnière (24) est agencée dans la direction radiale plus près qu'un diamètre de la goupille de charnière (25) par rapport au bord circonférentiel extérieur (11) de la bride d'étanchéité (10).

9. Dispositif anti-retour (1) selon l'une quelconque des revendications précédentes, **caractérisé en ce que** le creux (26) est agencé dans la direction circonférentielle dans la zone de charnière (17) et s'étend dans une direction axiale depuis un côté extérieur du bord d'ouverture (16) de l'ouverture d'écoulement de sortie (8) en direction de l'ouverture d'écoulement d'entrée (5).

10. Dispositif anti-retour (1) selon l'une quelconque des revendications précédentes, **caractérisé en ce qu'**un canal d'ouverture de passage étanche à l'air (29) s'étend dans la chambre de condensat (27) depuis l'ouverture de passage (28) en direction de la bride d'étanchéité (10) et une embouchure de canal d'ouverture de passage (30) est agencée à une distance de l'ouverture de passage (28) dans la chambre de condensat (27).

11. Dispositif anti-retour (1) selon l'une quelconque des revendications précédentes, **caractérisé en ce qu'**un bombement (19) du clapet de blocage (3) est adapté à un bord circonférentiel extérieur (11) de la bride d'étanchéité (10) de telle sorte que le clapet de blocage (3) puisse pivoter dans la position d'ouverture aussi loin que possible du bord d'ouverture (16) sans dépasser dans la direction radiale du bord circonférentiel extérieur (11).

12. Dispositif anti-retour (1) selon l'une quelconque des revendications précédentes, **caractérisé en ce qu'**un élément de butée et de limitation saillant vers l'extérieur est réalisé sur un côté extérieur du clapet de blocage (3) dirigé à l'écart du boîtier (2), qui, par une butée contre une paroi intérieure (13) du canal d'écoulement environnant (14), limite un mouvement de pivotement du clapet de blocage (3) dans la position d'ouverture.
